Europäisches Patentamt

European Patent Office

Office européen des brevets

(11) Publication number: **0 173 482**
**A1**

## EUROPEAN PATENT APPLICATION

(21) Application number: **85305563.0**

(22) Date of filing: **05.08.85**

(51) Int. Cl.⁴: **F 16 H 37/08**

(30) Priority: **27.08.84 US 644428**

(43) Date of publication of application: **05.03.86**
**Bulletin 86/10**

(84) Designated Contracting States: **DE FR GB IT SE**

(71) Applicant: **BORG-WARNER CORPORATION, 200 South Michigan Avenue, Chicago Illinois 60604 (US)**

(72) Inventor: **Anderson, Scott Richard, 728 South 6th Street, LaGrange Illinois 60525 (US)**

(74) Representative: **Williams, Trevor John et al, J.A. KEMP & CO. 14 South Square Gray's Inn, London WC1R 5EU (GB)**

(54) Continuously variable transmission with synchronous shift and extended range.

(57) A continuously variable transmission (10) includes a variator in driven engagement with an input (12), and a drive mechanism (40) in driven engagement with the variator. A compound planetary gear assembly includes a carrier in driven engagement with the input, a first sun gear (56) in driven engagement with the drive mechanism, a second sun gear (58), a first pinion (60) in meshing relationship with the first sun gear, and a second pinion (62) in meshing relationship with the first pinion and second sun gear. The first and second pinions are independently journaled on the carrier. A first clutch (64) engages the first sun gear with the output, and a second clutch (66) engages the second sun gear with the output.

-1-

CONTINUOUSLY VARIABLE TRANSMISSION
WITH SYNCHRONOUS SHIFT  AND EXTENDED RANGE

Description

This invention relates generally to a continuously variable transmission (CVT) adapted for use in a heavy automotive vehicle such as a bus or agricultural tractor.  More particularly, it relates to such a CVT with synchronous shift and extended range.

The typical automotive transmission is shifted in descrete steps between a low-speed, high-torque range for starting a vehicle and a high-speed, low-torque range for vehicle operation at highway speeds.  In a manual transmission, shifting is accomplished by the engagement of gear sets  In an automatic transmission, shifting is accomplished by the controlled engagement of friction elements.  Because such shifting is in step functions, the most efficient vehicle operation can only be approximated.  Automotive engineers have long recognized that efficiency would be improved if the transmission could be adjusted continuously to compensate for changing loads, speeds, etc.  This would allow the engine to be operated at maximum efficiency under changing conditions.

CVTs have been known for some time.  The typical CVT employs a variable-ratio drive mechanism (variator) including a variable pulley having a pair of flanges mounted on a primary shaft, with one of the flanges being movable with respect to the other so as to change the pulley pitch radius.  Another, similar variable pulley is mounted on a secondary shaft. A suitable belt or chain couples the pulleys for transferring torque therebetween. When the pitch radius of one pulley is changed, the pitch radius of the other pulley is changed simultaneously in the opposite direction. As a result, the speed ratio between the primary and secondary shafts is varied in a continuous, smooth manner within limits defining the ratio range of the variator. Typically, although not necessarily, this range is from a reduction ratio to its inverse overdrive ratio.

In recent years considerable work has been directed to the application of a CVT to the driveline of an automotive vehicle. Examples of such CVTs are disclosed in U.S. Patent 2,933,952 issued April 26, 1960 and U.S. Patent 3,479,908 issued November 25, 1969. Each of these patents discloses a CVT including a variator in combination with a simple planetary gear set. The CVT has two speed ranges; one a single-path configuration driving through the variator, and the other a split-path configuration driving through both the variator and the planetary gear set. In the split-path configuration one of the planetary elements acts as a reaction member, and reaction torque recirculates through the variator. The relationship is such that as this reaction torque increases, the speed range of the CVT is correspondingly extended. The extent to which the speed range of the CVT can be extended is determined by the torque capacity of the variator.

In any planetary gear set, reaction torque is a function of the ratio of the sun-gear pitch radius to the ring-gear pitch radius. In a simple planetary gear set the sun gear is considerably smaller than the ring gear. If the sun gear is the reaction member in a split-path CVT, reaction torque is considerably less than the torque capacity of the variator, but this results in only a small extension of the speed range. If the ring gear is the reaction member, the extension is larger, but the variator must accommodate considerably more reaction torque. To provide for this, the speed range in the single-path configuration must be reduced. Thus, in order to extend the ratio range of the CVT to its optimum degree, it would be desirable if the reaction torque were close to the torque capacity of the variator.

Another example of such a CVT is disclosed in U.S. Patent 3,340,749 issued September 12, 1967. This patent discloses a CVT having a variator in combination with a compound planetary gear assembly. This CVT has a plurality of speed ranges; one a single-path configuration driving through the variator, and another a split-path configuration driving through both the variator and the compound planetary gear assembly. An assembly of this type includes two sun gears and two pinions. One of the sun gears acts as the ring gear of a simple planetary gear set, but has the advantage of being smaller than a ring gear. However, the pinions are secured together for rotation in unison. This presents a problem when shifting from one range to another. During one pass through the variator, the transmission ratio changes in one direction as the variator ratio is changed in one direction. After one pass; that is, at the shift point, the variator must be returned to its original condition before the shift can be completed.

Only then can the variator ratio again be changed, in the original direction, to continue changing the transmission ratio in its original direction. Thus, although the range of this CVT is extended, the shift is not synchronized. It would be desirable to provide a synchronous shift allowing the direction of the variator ratio change to be reversed smoothly at the shift point without reversing the direction of the transmission ratio change.

In summary, this invention is directed to a continuously variable transmission including a variator, and a drive mechanism engaged in series with the variator. Together they define a power train driven by an input. A compound planetary gear assembly includes a carrier driven by the input, a first sun gear driven by the power train, a second sun gear, a first pinion in meshing relationship with the first sun gear, and a second pinion in meshing relationship with the first pinion and second sun gear. The first and second pinions are independently journaled on the carrier. First and second clutch means respectively engage the first and second sun gears with an output.

The objects and advantages of this invention will become apparent to those skilled in the art upon careful consideration of the specification herein, including the drawing, wherein:

FIGURE 1 is a schematic diagram of the CVT of this invention;

FIGURE 2 is a sectional view showing details of the compound planetary gear assembly;

FIGURE 3 is a graph illustrating the relationship of the variator speed ratio to the transmission speed ratio; and

FIGURES 4a and 4b are schematic diagrams illustrating a range extender which may be incorporated into the CVT of this invention.

While this invention is susceptible of embodiment in many different forms, the preferred embodiment is shown in the drawing and described in detail. It should be understood that the present disclosure is considered to be an exemplification of the principles of the invention, and is not intended to limit the invention to this embodiment.

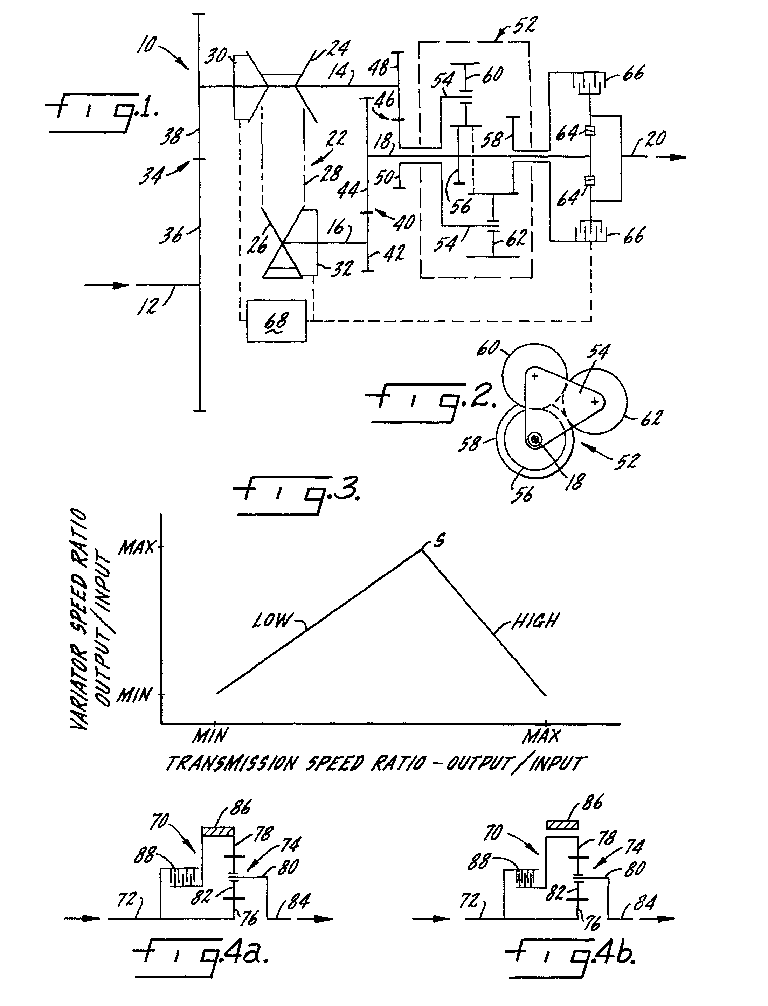

Referring now to FIGURE 1 in greater detail, the preferred embodiment of this invention incorporates a CVT 10 including an input shaft 12 adapted to receive power from the engine of an associated automotive vehicle (not shown). CVT 10 also includes a primary shaft 14, a secondary shaft 16, a drive shaft 18, and an output shaft 20 adapted to direct power to the drive axle of the vehicle.

A variator 22 includes a primary pulley 24 on shaft 14, and a secondary pulley 26 on shaft 16. A suitable belt 28 or the like couples pulleys 24 and 26. Suitable servomotors 30 and 32, for example hydraulic cylinders, are provided to change the pitch radii of pulleys 24 and 26 respectively. As is well known in the art, the pitch radii of pulleys 24 and 26 are changed inversely such that variator 22 develops a ratio which is continuously variable between predetermined limits. In the preferred form of the invention, the ratio range is between the limits of a minimum reduction speed ratio and a maximum overdrive speed ratio.

Shaft 14 could be driven directly by the engine. However, it may be desirable to provide some matching means 34, for example an input gear set, in order to match the torque capacity of variator 22 to the particular engine with which it is to be used. Gear set 34 may provide either reduction or overdrive, as required by the particular installation. It includes a drive gear 36 secured to shaft 12, and a driven gear 38 secured to shaft 14.

A drive mechanism 40, preferably a gear set or the like, includes a drive gear 42 secured to shaft 16, and a driven gear 44 secured to shaft 18. Variator 22 and drive mechanism 40 are engaged in series, and together define a power train 22,40. Another drive mechanism 46, preferably a gear set, includes a drive gear 48 secured to shaft 14, and a driven gear 50.

A compound planetary gear assembly 52 includes a carrier 54 secured to gear 50, a first sun gear 56 secured to shaft 18, a second sun gear 58 journaled on shaft 18, a first pinion 60, and a second pinion 62. It is important to note that pinions 60 and 62 are independently journaled on carrier 54. As best shown in FIGURE 2, sun gear 56 meshes with pinion 60, pinion 60 meshes with pinion 62, and pinion 62 meshes with sun gear 58.

Variator 22, drive mechanism 40, and drive mechanism 46 are related such that after the first pass through variator 22; that is, after its ratio has been changed from the reduction limit to the overdrive limit, sun gears 56 and 58 rotate in synchronism. In other words, after one pass through variator 22 its overdrive ratio multiplied by the reduction ratio of drive mechanism 40 should be equal to the ratio of drive mechanism 46. For example, if the ratio of drive mechanism 46 is one-to-one, then the reduction ratio of drive mechanism 40 should be substantially equal to the maximum overdrive ratio of variator 22 obtained after one pass.

A first clutch 64 is provided for engaging shaft 18 and sun gear 56 with shaft 20. If engine braking is not required, clutch 64 may be a one-way clutch which allows shaft 20 to overrun shaft 18. If engine braking is required, the one-way clutch may be replaced by a friction clutch or the like. A second clutch 66 is provided for engaging sun gear 58 with output shaft 20. Clutch 66 may be a friction clutch or the like.

A suitable control system 68 is provided to control operation of servomotors 30 and 32, clutch 66, clutch 64 if necessary, and a range extender 70 to be described.

As the operating cycle begins, the components of CVT 10 are in the condition shown in FIGURE 1. Variator 22 is at the minimum reduction limit of its ratio range. Clutch 66 is disengaged. Drive is from input shaft 12 through gear set 34, shaft 14, variator 22, shaft 16, drive mechanism 40, shaft 18 and clutch 64

-8-

to output shaft 20. This establishes a single-path configuration with all of the torque being transferred through variator 22. With variator 22 at this minimum speed ratio, the transmission is correspondingly at its minimum speed ratio. Due to the planetary action of assembly 52, sun gear 58 is rotating faster than sun gear 56.

During the first pass through variator 22, its ratio is changed from reduction to overdrive. As this change takes place, the speed of output shaft 20 increases. This is represented as the low range in the graph of FIGURE 3, showing that the transmission speed ratio increases as the variator speed ratio increases. The speed of sun gear 56 also increases, while at the same time the speed of sun gear 58 decreases.

Assume, for example, that the ratio of gear set 46 is one-to-one, and that the reduction ratio of gear set 40 is substantially equal to the maximum overdrive ratio of variator 22. After one pass through variator 22, shaft 18 and carrier 54 are rotating in synchronism. Thus sun gears 56 and 58 also are rotating in synchronism. This is represented as synchronous shift point S in the graph of FIGURE 3.

Clutch 66 now is actuated to engage sun gear 58 with output shaft 20. The operating cycle continues during a second pass through variator 22 as its ratio is changed in the opposite direction from overdrive to reduction. The speed of sun gear 56 decreases, and one-way clutch 64 disengages. The speed of sun gear 58 and output shaft 20 increases. This is represented as the high range in the graph of FIGURE 3, showing that the transmission speed ratio continues to increase as the variator speed ratio decreases. The transmission ratio reaches its maximum when the variator returns to its minimum reduction ratio.

In the low range, CVT 10 has a single-path configuration. In the high range, CVT 10 has a split-path configuration in which carrier 54 acts as an input member, sun gear 58 acts as an output member, and sun gear 56 acts as a reaction member. Reaction torque is recirculated from gear 56 through gear set 40, variator 22, and gear set 46 back to carrier 54.

Under ideal conditions, the reaction torque would be equal to the torque capacity of variator 22. However, that would require that sun gears 56 and 58 have equal pitch radii. This is impractical, as assembly 52 would lock up under this condition. The preferred practical compromise is for the pitch radius of sun gear 56 to be slightly smaller (perhaps by approximately fifteen percent) than the pitch radius of sun gear 58. This would insure that the reaction torque recirculating through variator 22 does not exceed its torque capacity, while at the same time it would extend the ratio range of CVT 10 to the optimum degree.

Under ideal conditions, the reaction torque would be equal to the torque capacity of variator 22. However, that would require that sun gears 56 and 58 have equal pitch radii. This is impractical, as assembly 52 would lock up under this condition. The preferred practical compromise is for the pitch radius of sun gear 56 to be slightly smaller (perhaps by approximately fifteen percent) than the pitch radius of sun gear 58. This would insure that the reaction torque recirculating through variator 22 does not exceed its torque capacity, while at the same time it would extend the ratio range of CVT 10 to the optimum degree.

If variator 22 were designed such that centrifugal forces acting upon belt 28 were low enough; the ratio range of CVT 10 could be extended slightly by having the pitch radius of sun gear 56 slightly larger than that of sun gear 58. However, in this event the reaction torque recirculating through variator 22 would also be larger.

FIGURES 4a and 4b illustrate schematically an optional range extender 70 which may be used with CVT 10. FIGURE 4a shows range extender 70 in a reduction drive mode, and FIGURE 4b shows range extender 70 in a direct drive mode. A suitable range extender is disclosed in U.S. Patent 2,711,656 issued June 28, 1955. This patent is of common assignee herewith, and is incorporated herein by reference.

Range extender 70 includes an input 72 which may be connected to or an extension of shaft 20. A planetary gear set 74 or the like includes a sun gear 76, a ring gear 78, a carrier 80, and planet gears 82 supported by carrier 80 in meshing relationship with sun gear 76 and ring gear 78. Sun gear 76 is driven by input 72. Carrier 80 drives an output 84.

In the reduction drive mode illustrated in FIGURE 4a, a band 86 brakes ring gear 78, and a clutch 88 is disengaged. Ring gear 78 serves as a reaction member, and reduction ratio drive is established from input 72 through planetary gear set 74 to output 84. In this mode, band 86 also acts as a starting clutch, eliminating the need for CVT 10 to be provided with a separate starting clutch.

The reduction ratio in the reduction drive mode should be substantially equal to the total change in the ratio of CVT 10 during one cycle; that is, after two passes through variator 22.

In the direct drive mode illustrated in FIGURE 4b, band 86 is released, and clutch 88 is engaged so as to lock sun gear 76 to ring gear 78. Direct drive is established from input 72 through planetary gear set 74 to output 84.

The sequence of operations requires that band 86 be engaged and clutch 88 disengaged during the first operating cycle; that is, during the first and second passes through variator 22. Then clutch 88 is engaged and band 86 disengaged. The operating cycle now may be repeated. At the end of two cycles; that is, four passes through variator 22, the change in the ratio of CVT 10 will be increased exponentially over that shown in FIGURE 3.

Additional operating cycles may be provided for by adding additional planetary gear sets or the like in series with planetary gear set 74, for example as disclosed in the aforementioned U.S. patent 2,711,656. This patent also discloses a forward/reverse arrangement which may be incorporated into CVT 10 if desired.

-12-

## CLAIMS

1. A continuously variable transmission (10) comprising an input (12); a variator (22) having a ratio range that is continuously variable between predetermined limits; a drive mechanism (40) engaged in series with said variator to define therewith a power train (22,40) in driven engagement with said input; a compound planetary gear assembly (52) including a carrier in driven engagement with said input, a first sun gear (56) in driven engagement with said power train, a second sun gear (58), a first pinion (60) in meshing relationship with said first sun gear, and a second pinion (62) in meshing relationship with said first pinion and second sun gear, said first and second pinions being independently journaled on said carrier; an output (20); first clutch means (64) for engaging said first sun gear with said output; and second clutch (66) means for engaging said second sun gear with said output.

2. The continuously variable transmission of Claim 1; said drive mechanism (40) having a fixed ratio; the ratio of said drive mechanism (40) and the ratio of said variator (22) at one of its limits being related such that at said one limit said first (56) and second sun gears (58) rotate in synchronism.

3. The continuously variable transmission of Claim 2; further comprising another drive mechanism (46) effecting said driven engagement of said carrier (54) with said input (12), said other drive mechanism

-13-

having a fixed ratio; the ratio of said drive mechanism (40), the ratio of said variator (22) at one of its limits, and the ratio of said other drive mechanism (46) being related such that at said one limit said first (56) and second (58) sun gears rotate in synchronism.

4. The continuously variable transmission of Claim 1; the ratio range of said variator (22) having a reduction limit and an overdrive limit; said drive mechanism (40) having a fixed reduction ratio; the ratio of said drive mechanism (40) and the ratio of said variator (22) at its overdrive limit being related such that at said overdrive limit said first (56) and second (58) sun gears rotate in synchronism.

5. The continuously variable transmission of Claim 4; further comprising another drive mechanism (46) effecting said driven engagement of said carrier (54) with said input (12), said other drive mechanism (46) having a fixed ratio; the reduction ratio of said drive mechanism, the ratio of said variator (22) at its overdrive limit, and the ratio of said other drive mechanism (46) being related such that at said overdrive limit said first (56) and second (58) sun gears rotate in synchronism.

6. The continuously variable transmission of Claim 1; said first clutch means (64) including a one-way clutch allowing said output to overrun said first sun gear (56).

7. The continuously variable transmission of Claim 2; said first clutch means (64) including a one-way clutch allowing said output to overrun said first sun gear (56).

8. The continuously variable transmission of Claim 3; said first clutch means (64) including a one-way clutch allowing said output (20) to overrun said first sun gear (56).

9. The continuously variable transmission of Claim 4; said first clutch means (64) including a one-way clutch allowing said output (20) to overrun said first sun gear (56).

10. The continuously variable transmission of Claim 5; said first clutch means (64) including a one-way clutch allowing said output (20) to overrun said first sun gear (56).

11. A continuously variable transmission comprising an input shaft (12); a primary shaft (14); means (34) engaging said input and primary shafts; a secondary (16) shaft; a variator (22) coupling said primary and secondary shafts, said variator (22) having a ratio range that is continuously variable between predetermined reduction and overdrive limits; a drive shaft (18); a drive mechanism (40) engaging said secondary and drive shafts, said drive mechanism having a fixed reduction ratio; a compound planetary gear assembly (52) including a first sun gear (56) secured to said drive shaft (18), a second sun gear (58) journaled on said drive shaft, a carrier (54), and first (60) and second (62) pinions journaled independently on said carrier (54); another drive mechanism (46) engaging said primary shaft (14) and carrier (54), said other drive mechanism having a fixed ratio; said variator (22), drive mechanism (40), and other drive mechanism being related such that said drive shaft (18) and second sun gear (58) rotate in synchronism when said variator (22) is at its overdrive limit; first clutch means (64) for engaging said drive shaft (18) with said output (20); second clutch means (66) for engaging said second sun gear (58) with said output (20); and means (68) for controlling variation of the ratio range of said variator and engagement of at least one of said clutch means.

12. The continuously variable transmission of Claim 11; said means engaging said input and primary shafts including matching means having an overdrive ratio.

13. The continuously variable transmission of Claim 11; said first clutch means (64) including a one-way clutch allowing said output (20) to overrun said drive shaft (18). d

14. The continuously variable transmission of Claim 12; said first clutch means (64) including a one-way clutch allowing said output (20) to overrun said drive shaft (18).

15. The continuously variable transmission of Claim 11; further comprising a range extender (70) in driven engagement with said output shaft (72,20); said range extender having a reduction drive mode and a

0173482

-16-

direct drive mode, said reduction drive mode having a reduction ratio substantially equal to the ratio change of the transmission which results as the variator ratio is changed from one limit to the other limit and back to said one limit; and means (68) for shifting between said modes.

16. The continuously variable transmission of Claim 12; further comprising a range extender (70) in driven engagement with said output shaft (20); said range extender having a reduction drive mode and a direct drive mode, said reduction drive mode having a reduction ratio substantially equal to the ratio change of the transmission which results as the variator ratio is changed from one limit to the other limit and back to said one limit; and means (68) for shifting between said modes.

17. The continuously variable transmission of Claim 13; further comprising a range extender (70) in driven engagement with said output shaft (20); said range extender having a reduction drive mode and a direct drive mode, said reduction drive mode having a reduction ratio substantially equal to the ratio change of the transmission which results as the variator ratio is changed from one limit to the other limit and back to said one limit; and means (68) for shifting between said modes.

18. The continuously variable transmission of Claim 14; further comprising a range extender (70) in driven engagement with said output shaft (20); said range extender having a reduction drive mode and a direct drive mode, said reduction drive mode having a reduction ratio substantially equal to the ratio change of the transmission which results as the variator ratio is changed from one limit to the other limit and back to said one limit; and means (68) for shifting between said modes.

19. The continuously variable transmission of claim 1; said first sun gear (56) having a pitch radius smaller than the pitch radius of said second sun gear (58).

20. The continuously variable transmission of claim 2; said first sun gear (56) having a pitch radius smaller than the pitch radius of said second sun gear (58).

21. The continuously variable transmission of claim 3; said first sun gear (56) having a pitch radius smaller than the pitch radius of said second sun gear (58).

22. The continuously variable transmission of claim 4; said first sun gear (56) having a pitch radius smaller than the pitch radius of said second sun gear (58).

23. The continuously variable transmission of claim 5; said first sun gear (56) having a pitch radius smaller than the pitch radius of said second sun gear (58).

0173482

-18-

24. The continuously variable transmission of claim 11; said first sun gear (56) having a pitch radius smaller than the pitch radius of said second sun gear (58).

25. The continuously variable transmission of claim 15; said first sun gear (56) having a pitch radius smaller than the pitch radius of said second sun gear (58).

fig.1.

fig.2.

fig.3.

VARIATOR SPEED RATIO OUTPUT / INPUT

MAX

MIN

LOW

S

HIGH

MIN

MAX

TRANSMISSION SPEED RATIO – OUTPUT / INPUT

fig.4a.

fig.4b.

**European Patent Office**

# EUROPEAN SEARCH REPORT

| Category | Citation of document with indication, where appropriate, of relevant passages | Relevant to claim | CLASSIFICATION OF THE APPLICATION (Int. Cl.4) |
|---|---|---|---|
| | **DOCUMENTS CONSIDERED TO BE RELEVANT** | | EP 85305563.0 |
| A | DE - A1 - 3 045 884 (FLOEGEL)<br>* Totality * | 1-5,11,<br>12,19-<br>25 | F 16 H 37/08 |
| A | DE - B - 1 088 775 (ROCKWELL)<br>* Column 6 * | 1-5,11,<br>12 | |
| A | FR - A - 2 431 077 (CENTRO RICERCHE<br>FIAT)<br>* Totality * | 6-10,13,<br>14 | |
| A | DE - A1 - 3 305 924 (VALEO)<br>* Totality * | 15-18 | |
| D,A | US - A - 3 340 749 (MAGG et al.)<br>* Fig. 6 * | 19-25 | **TECHNICAL FIELDS SEARCHED (Int. Cl.4)** |
| T | HUGO KLEIN "Die Planetenrad-Umlauf-<br>rädergetriebe", 1962<br>CARL HANSER VERLAG, München<br>* Pages 40,41 * | | F 16 H   3/00<br>F 16 H   9/00<br>F 16 H 37/00 |

The present search report has been drawn up for all claims

| Place of search | Date of completion of the search | Examiner |
|---|---|---|
| VIENNA | 20-11-1985 | SCHATEK |